# EUROPÄISCHE PATENTSCHRIFT

(11) **EP 2 191 214 B1**
(45) Veröffentlichungstag und Bekanntmachung des Hinweises auf die Patenterteilung: **12.02.2020**
(21) Anmeldenummer: 08802997.0
(22) Anmeldetag: 12.08.2008
(51) Int. Cl.: F25D 23/02, A47F 3/04, F25D 21/04

(54) **TÜRKÖRPER MIT GLASFLÄCHENPLATTE SOWIE ELEKTRISCHES HAUSHALTSGERÄT MIT VERWENDUNG DES BETREFFENDEN TÜRKÖRPERS**
DOOR BODY WITH A GLASS SURFACE PLATE AND ELECTRIC DOMESTIC APPLIANCE USING THE DOOR BODY IN QUESTION
CORPS DE PORTE AVEC UNE PLAQUE DE VERRE PLANE, ET APPAREIL MÉNAGER ÉLECTRIQUE UTILISANT CE CORPS DE PORTE

(30) Priorität: 21.08.2007 CN 200710130869
(43) Veröffentlichungstag der Anmeldung: 02.06.2010
(73) Patentinhaber: BSH Hausgeräte GmbH, 81739 München (DE)
(72) Erfinder: MA, Jingdong, Chuzhou Anhui 239016 (CN); RUPP,Alexander, 81739 München (DE); XU, Lin, Chuzhou Anhui 239016 (CN)
(86) Internationale Anmeldenummer: PCT/EP2008/060551
(87) Internationale Veröffentlichungsnummer: WO 2009/024498

(56) Entgegenhaltungen:
- WO-A-99/45331
- WO-A-2004/105558
- DE-A1- 19 833 958
- GB-A- 1 050 375
- GB-A- 2 199 360
- US-A- 3 629 972
- US-A- 4 035 608
- US-A- 4 477 129
- US-A- 4 998 382
- US-A- 5 910 083
- US-A1- 2006 260 229

## Beschreibung

### [Technisches Gebiet]

Die vorliegende Erfindung betrifft einen Türkörper, insbesondere einen Türkörper mit Glasflächenplatte sowie elektrisches Haushaltsgerät mit Verwendung des betreffenden Türkörpers.

### [Stand der Technik]

US 4,998,382 offenbart einen mehrschichtigen Glastüraufbau, bei welchem sich die vordere Glasschicht weiter nach außen erstreckt als dahinter angeordnete Glasschichten.

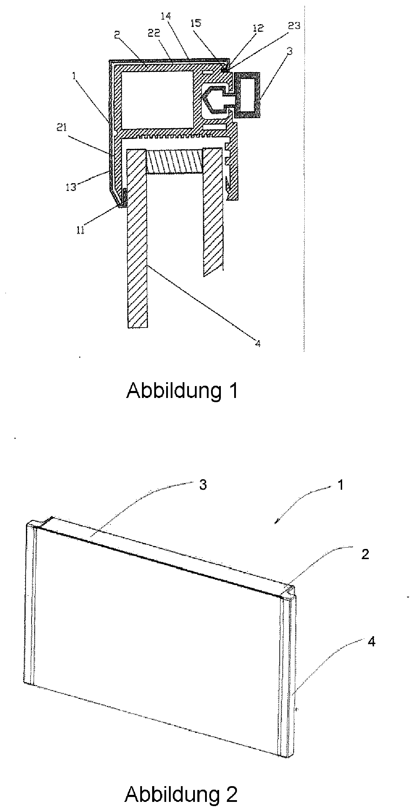

Elektrische Haushaltsgeräte, insbesondere elektrische Kühlschränke und Gefrierschränke werden seit geraumer Zeit im alltäglichen Leben zur Lagerung von Lebensmitteln verwendet. Im Zuge der kontinuierlichen Steigerung des Lebensstandards erwarten die Kunden von den elektrischen Haushaltsgeräten nicht nur die Erfüllung ihrer praktische Funktionen, sondern verlangen auch nach einem optisch ansprechenden äußeren Erscheinungsbild der elektrischen Haushaltsgeräte.
Glasflächenplatten können durch entsprechende Bearbeitung in verschiedenen Farben hergestellt werden und bewirken einen dekorativen Spiegeleffekt Inden letzten Jahren wurden solche Glasflächenplatten umfassend an den Türkörpern von elektrischen Haushaltsgeräten verwendet. Das chinesische Gebrauchsmuster 200520057122.0 offenbart einen Türkörper mit Glasflächenplatte. Wie in Abbildung 1 dargestellt (es handelt sich um die Abbildung 2 aus der Beschreibung des Gebrauchsmusters 200520057122.0) weist der entsprechende Türkörper einen Türrahmen 2 sowie Glasflächenplatte 4 auf. An den Seitenkanten von Türrahmen 2 wird eine Positionierungsrille gebildet. Die Glasflächenplatte 4 fasst in die vorstehend bezeichnete Positionierungsrille ein und wird auf diese Weise positioniert. Durch eine Metallplatte 1 wird die Glasflächenplatte 4 wiederum an dem Türrahmen 2 befestigt. Die vorstehend bezeichnete Konzeption des Türkörpers weist zwei Mangelhaftigkeiten auf:
Zum einen muss die Glasflächenplatte 4 bei der Montage von dem oberen Ende des Türrahmens 2 beziehungsweise von dessen unterem Ende in die Positionierungsrillen eingesteckt werden. Weil die Abmessungen der Glasflächenplatte 4 recht groß sind, erfordert die Montage durch Einstecken eine sehr gute Abstimmung der Abmessungen zwischen Türrahmen 2 und Glasflächenplatte 4, was die Schwierigkeit der Montage erhöht. Weil sich zum zweiten an dem Türrahmen 2 Positionierungsrillen und Metallplatte 1 befinden, kann die Glasflächenplatte 4 nicht die gesamte vordere Fläche des Türkörpers abdecken, sondern an den beiden Seite verbleiben unansehnliche streifenförmige Metallkanten, was das optische Erscheinungsbild des Türkörpers beeinträchtigt. Zum dritten weist die Glasflächenplatte 4 nur zwei voneinander getrennte Glasschichten auf, deren Abdichtung gegen den Türrahmen 2 nicht kompakt ist, was die Wärmeisolationseigenschaften des elektrischen Haushaltsgerätes beeinträchtigt.

### [Inhalt der Erfindung]

Die Zielsetzung der vorliegenden Erfindung besteht in der Bereitstellung eines Türkörpers, der sowohl einfach zu montieren ist als auch gute Wärmeisolationseigenschaften aufweist.
Für die Verwirklichung der vorstehend bezeichneten Zielsetzung sieht eine Ausführungsform der vorliegenden Erfindung einen Türkörper vor, welcher einen Rahmen sowie an vorstehend bezeichnetem Rahmen befestigte Glastürplatte aufweist, wobei die vorstehend bezeichnete Glastürplatte voneinander getrennt äußere Glasflächenplattenschicht, mittlere Glasflächenplattenschicht und innere Glasflächenplattenschicht aufweist, wobei die mittlere Glasflächenplattenschicht durch Dichtungselemente jeweils mit äußerer Glasflächenplattenschicht und innerer Glasflächenplattenschicht verbunden wird, so dass zwischen zwei benachbarten Glasflächenplattenschichten ein Dichtungshohlraum gebildet wird und wobei zumindest eine Glasflächenplattenschicht durch Klebeelement an dem Rahmen befestigt wird.

Erfindungsgemäß ist dabei vorgesehen, dass der Türkörper zwischen den Umfangsabmessungen von mittlerer Glasflächenplattenschicht und von innerer Glasflächenplattenschicht zum Rahmen einen Spalt aufweist, wobei ein Dichtungsfutter zwischen der inneren Glasflächenplattenschicht und dem Rahmen vorgesehen ist.

Eine weitere Verbesserung der vorliegenden Erfindung sieht vor, dass es sich bei dem vorstehend bezeichneten Dichtungselement um eine zwischen zwei Glasflächenplattenschichten vorgesehene Dichtungsleiste aus Kunststoff handelt - beispielsweise um eine Leiste aus Polyvinylchlorid (PVC).

Eine weitere Verbesserung der vorliegenden Erfindung sieht vor, dass es sich bei dem vorstehend bezeichneten Klebeelement um doppelseitiges Klebeband handelt, wobei die eine Seite des doppelseitigen Klebebandes an den Rahmen geklebt wird, während die andere Seite des doppelseitigen Klebebandes an die Seitenfläche der Glasflächenplatte geklebt wird.

Eine weitere Verbesserung der vorliegenden Erfindung sieht vor, dass das vorstehend bezeichnete doppelseitige Klebeband zwischen innerer Glasflächenplattenschicht und Rahmen vorgesehen wird.

Eine weitere Verbesserung der vorliegenden Erfindung sieht vor, dass das vorstehend bezeichnete doppelseitige Klebeband zwischen äußerer Glasflächenplattenschicht und Rahmen vorgesehen wird und dass die Abmessungen der vorstehend bezeichneten äußeren Glasflächenplattenschicht größer sind als die vorstehend bezeichnete mittlere Glasflächenplattenschicht und die innere Glasflächenplattenschicht, wobei das doppelseitige Klebeband an den Rand der äußeren Glasflächenplattenschicht geklebt wird und zwischen vorstehend bezeichneter innerer Glasflächenplattenschicht und Rahmen das erfindungsgemäße Dichtungsfutter vorgesehen wird.

Eine weitere Verbesserung der vorliegenden Erfindung sieht vor, dass in dem vorstehend bezeichneten Dichtungshohlraum die Auffüllung mit trägem Gas erfolgt - beispielsweise mit Argon beziehungsweise mit Helium.

Eine weitere. Verbesserung der vorliegenden Erfindung sieht vor, dass die vorstehend bezeichnete äußere Glasflächenplattenschicht und/oder die innere Glasflächenplattenschicht mit einer schwachstrahlenden (Low-E)-Folie beschichtet wird/werden.

Eine weitere Verbesserung der vorliegenden Erfindung sieht vor, dass an der vorstehend bezeichneten äußeren Glasflächenplattenschicht ein Heizelement zur Verhinderung von Kondensationsbildung vorgesehen wird, wobei es sich beispielsweise um eine elektrisch leitende Silberpaste beziehungsweise um eine elektrisch leitende Folie handelt.

Eine weitere Verbesserung der vorliegenden Erfindung sieht vor, dass das vorstehend bezeichnete Heizelement mittels Verbindungsvorrichtung mit einer externen elektrischen Stromquelle verbunden wird und dass die vorstehend bezeichnete Verbindungsvorrichtung ein mit der Verbindungsvorrichtung verbundenes Leitungskabel sowie einen am Ende des Leitungskabels vorgesehenen Metallkontakt aufweist.

Ein elektrisches Haushaltsgerät entsprechend einer Ausführungsform der vorliegenden Erfindung - insbesondere elektrischer Kühlschrank beziehungsweise Gefrierschrank - welches einen Schrankkörper mit darin befindlichem Aufnahmeraum aufweist, dadurch gekennzeichnet, dass das Gerät außerdem einen Türkörper gemäß beliebigem der vorstehend aufgeführten Patentansprüche aufweist, wobei der vorstehend bezeichnete Türkörper mit dem vorstehend bezeichneten Schrankkörper verbunden wird und zwischen geöffneter Position und geschlossener Position gedreht werden kann. Der vorstehend bezeichnete Türkörper weist einen Rahmen sowie an vorstehend bezeichnetem Rahmen befestigte Glastürplatte auf, wobei die vorstehend bezeichnete Glastürplatte voneinander getrennt kl, mittlere Glasflächenplattenschicht und innere Glasflächenplattenschicht aufweist, wobei die mittlere Glasflächenplattenschicht durch Dichtungselemente jeweils mit äußerer Glasflächenplattenschicht und innerer Glasflächenplattenschicht verbunden wird, so dass zwischen zwei benachbarten Glasflächenplattenschichten ein Dichtungshohlraum gebildet wird und wobei zumindest eine Glasflächenplattenschicht durch Klebeelement an dem Rahmen befestigt wird.

Eine weitere Verbesserung der vorliegenden Erfindung sieht vor, dass sich an dem Schrankkörper ein mit der elektrischen Stromquelle des Schrankkörpers verbundener Metallkontaktpunkt befindet und dass bei geschlossener Position des vorstehend bezeichneten Türkörpers Kontakt zwischen vorstehend bezeichnetem Metallkontaktpunkt des Schrankkörpers und vorstehend bezeichnetem Metallkontakt des Türkörpers besteht, um das Heizelement an der Glasflächenplatte des Türkörpers mit elektrischem Strom zu versorgen.

Eine weitere Verbesserung der vorliegenden Erfindung sieht vor, dass es sich bei der elektrischen Stromquelle von vorstehend bezeichnetem Schrankkörper um eine elektrische Gleichstromquelle mit niedriger Spannung handelt.

Die nützlichen Effekte der vorliegenden Erfindung sind nachstehend aufgeführt: Die Glasflächenplatte kann direkt frontal auf den Türkörper aufgeklebt werden, was die Montage des Türkörpers vereinfacht. Weil eine Glasflächenplatte mit mehreren Schichten und Dichtungshohlraum erfolgt, weist der Türkörper verbesserte Wärmeisolationseigenschaften auf.

### [Erläuterung der Abbildungen]

Bei Abbildung 1 handelt es sich um die Darstellung eines herkömmlichen Türkörpers mit Glasflächenplatte.

Bei Abbildung 2 handelt es sich um die dreidimensionale Darstellung eines Türkörpers entsprechend einem praktischen Ausführungsbeispiel der vorliegenden Erfindung.

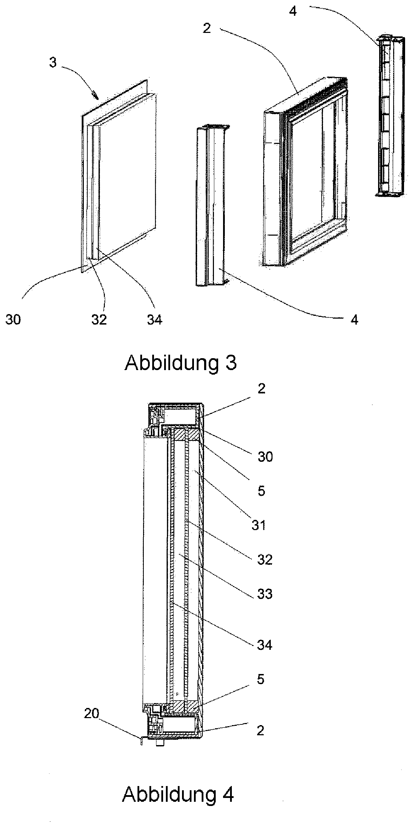

Bei Abbildung 3 handelt es sich um die dreidimensionale Explosionszeichnung des Türkörpers aus der Abbildung 1.

Bei Abbildung 4 handelt es sich um die Schnittdarstellung des Türkörpers aus der Abbildung 1.

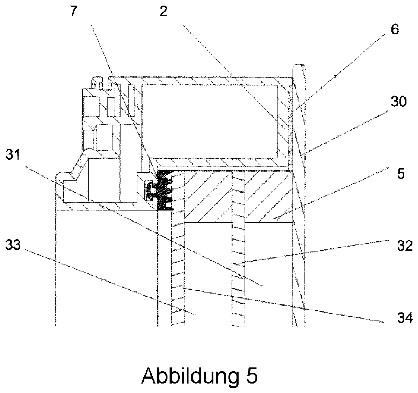

Bei Abbildung 5 handelt es sich um die vergrößerte Darstellung eines Bereiches des Türkörpers aus der Abbildung 4.

### [Praktisches Ausführungsbeispiele]

Wie in Abbildung 2 und Abbildung 3 gezeigt handelt es sich bei dem vorliegenden praktischen Ausführungsbeispiel um einen Türkörper 1, welcher einen Rahmen 2 sowie an vorstehend bezeichnetem Rahmen 2 befestigte Glastürplatte 3 aufweist sowie ein Paar Handgriffe 4, welche jeweils an den beiden Seiten des Rahmens befestigt werden. Der Rahmen 2 wurde mit Metallmaterial - beispielsweise rostfreiem Stahl - verstärkt gefertigt, so dass der Türkörper 1 eine ausreichende Festigkeit aufweist. Die vorstehend bezeichnete Glastürplatte 3 weist voneinander getrennt äußere Glasflächenplattenschicht 30, mittlere Glasflächenplattenschicht 32 und innere Glasflächenplattenschicht 34 auf, wobei die Konstruktion dieser Glasflächenplatte 3 nachstehend aufgeführt detailliert beschrieben wird: Die Handgriffe 4 werden an den Seitenflächen des Türkörpers 2 befestigt. Die Länge der Handgriffe 4 stimmt mit der Höhe des Rahmens 2 überein. Nach der Montage an den Rahmen 2 ergibt sich bei Ansicht von vorne eine einheitliche und kompakte Konstruktion. Wie aus Abbildung 4 ersichtlich ist, handelt es sich bei der Abbildung 4 um die Schnittdarstellung des Türkörpers aus der Abbildung 1. Die äußere Glasflächenplattenschicht 30, die mittlere Glasflächenplatteschicht 32 und die innere Glasflächenplatteschicht 34 der Glasflächenplatte 3 werden voneinander durch Dichtungselemente getrennt. In dem vorliegenden praktischen Ausführungsbeispiel handelt es sich bei dem Dichtungselement um eine Leiste aus Polyvinylchlorid (PVC) 5. Die PVC-Leiste 5 wird mit Kleber an die Außenränder der Seitenflächen der Glasflächenplattenflächen 30, 32 und 34 geklebt und bildet an den Seitenflächen der Glasflächenplatten 30, 32 und 34 einen durchgehenden Dichtungsring. Aus diesem Grund wird zwischen benachbarten äußerer Glasflächenplattenschicht 30 und mittlerer Glasflächenplattenschicht 32 ein Dichtungshohlraum 31 gebildet und zwischen benachbarten mittlerer Glasflächenplattenschicht 32 und innerer Glasflächenplattenschicht 34 wird ein Dichtungshohlraum 33 gebildet. Bei dem vorliegenden praktischen Ausführungsbeispiel sind die Abmessungen der äußeren Glasflächenplattenschicht 30 größer als die Abmessungen der mittleren Glasflächenplattenschicht 32 und der Abmessungen der inneren Glasflächenplattenschicht 34. Die Abmessungen der äußeren Glasflächenplattenschicht 30 stimmen mit den Abmessungen des Rahmens 2 überein, so das die äußere Glasflächenplattenschicht 30 mit den Umrandungen des Rahmens 2 übereinstimmen kann, was die Verbindung der Glasflächenplatte 3 mit dem Rahmen 2 einfach gestaltet. Die Abmessungen der mittleren Glasflächenplattenschicht 32 und die Abmessungen der inneren Glasflächenplattenschicht 34 sind etwas kleiner als die Abmessungen des vorstehend bezeichneten mittleren Raums des Rahmens 2. Auf diese Weise können die mittlere Glasflächenplattenschicht 32 und die innere Glasflächenplattenschicht 34 in den vorstehend bezeichneten mittleren Raum des Rahmens 2 positioniert werden, wobei die mittlere Glasflächenplattenschicht 32 und die innere Glasflächenplattenschicht 34 keinen direkten Kontakt mit dem Rahmen 2 aufweisen.

Wie aus der Abbildung 5 ersichtlich ist handelt es sich bei der Abbildung 5 um die vergrößerte Darstellung eines Bereiches des Türkörpers aus der Abbildung 4. Die äußere Glasflächenplattenschicht 30 wird durch Klebeelement an Rahmen 2 befestigt. Bei dem vorliegenden praktischen Ausführungsbeispiel handelt es sich bei dem Klebeelement um doppelseitiges Klebeband 6, wobei die eine Seite des doppelseitigen Klebebandes 6 an die Umrandung des Rahmens 2 geklebt wird, während die andere Seite des doppelseitigen Klebebandes an die äußere Glasflächenplattenschicht 30 geklebt wird, wodurch die Glasflächenplatte 3 an dem Rahmen 2 befestigt wird. Weil die Abmessungen der mittleren Glasflächenplattenschicht 32 und die Abmessungen der inneren Glasflächenplattenschicht 34 etwas kleiner sind als die Abmessungen des mittleren Raums von Rahmen 2, entsteht zwischen mittlerer Glasflächenplattenschicht 32 und innerer Glasflächenplattenschicht 34 und Rahmen 2 ein Spalt Ein Dichtungsfutter 7 wird zwischen innerer Glasflächenplattenschicht 34 und Rahmen 2 vorgesehen. Auf diese Weise wird der vorstehend bezeichnete Spalt abgedichtet und es wird auf diese Weise verhindert, dass kalte Luft durch diesen Spalt entweichen kann. Ein Ende des Dichtungsfutters 7 fasst in den Rahmen 2 ein, während das andere Ende gegen die Seitenfläche der innere Glasflächenplattenschicht 34 anstößt.

In dem vorliegenden praktisches Ausführungsbeispiel wird zur Verbesserung der Wärmeisolationseigenschaften von Türkörper 1 die Glasflächenplatte 2 einer weiteren Behandlung unterzogen. Um die Wärmeleitung zu vermindern, werden Dichtungshohlraum 31 und 33 mit trägem Gas wie beispielsweise Argon oder Stickstoff gefüllt, um auf diese Weise die Wärmeleitung zu vermindern. An äußerer Glasflächenplattenschicht 30 und innerer Glasflächenplattenschicht 34 wird eine Beschichtung mit schwachstrahlender (Low-E)-Folie vorgesehen.

Der Türkörper entsprechend dem vorliegenden praktischen Ausführungsbeispiel kann an den Aufbewahrungskammern elektrischer Haushaltsgeräte wie beispielsweise elektrischer Kühlschränke oder Gefrierschränke vorgesehen werden. Außerdem kann entsprechend der Abänderung zwischen Öffnungsposition beziehungsweise Schließposition des betreffenden Schrankkörpers eine leichtere Abdichtung des innern Raumes der Aufbewahrungskammer durchgeführt werden. Weil Türkörper 1 einen hohen Temperaturunterschied zwischen äußerer und innerer Seite aufweist, kommt es bei hoher Temperatur und hoher Feuchtigkeit der Umgebung leicht zu Kondensationserscheinungen an der äußeren Oberfläche der äußeren Glasflächenplattenschicht 30. Die vorliegende Erfindung verwendet ein Heizelement, um durch elektrische Beheizung die Kondensation an der äußeren Oberfläche der äußeren Glasflächenplattenschicht 30 zu beseitigen. Das Heizelement der vorliegenden Erfindung weist die Beschichtung der äußeren Glasflächenplattenschicht 30 mit einer elektrisch leitenden Folie auf beziehungsweise die Aufbringung einer elektrisch leitenden Silberpaste mit bestimmten elektrischen Widerstand. Die elektrisch leitende Folie beziehungsweise die elektrisch leitende Silberpaste werden durch eine Verbindungsvorrichtung mit der Stromquelle in dem Schrankkörper verbunden. Die betreffende Verbindungsvorrichtung weist Kabel zur Verbindung mit elektrisch leitender Folie beziehungsweise elektrisch leitender Silberpaste sowie an Türkörper 1 an dessen Untenseite vorgesehenen metallischen Kontakt 20 (siehe Abbildung 2) auf. Wenn sich der Türkörper 1 in geschlossener Position befindet, weist der metallische Kontakt 20 Kontakt mit dem an dem Schrankkörper befindlichen Metallkontaktpunkt auf. Der Metallkontaktpunkt an dem Schrankkörper ist mit der Stromquelle verbunden, so dass auf diese Weise der elektrische Strom zu der elektrisch leitenden Folie beziehungsweise der elektrisch leitenden Silberpaste geleitet wird. Bei der in dem Schrankkörper befindlichen Stromquelle handelt es sich normalerweise um eine Niedrigspannungsgleichstromquelle, um den Anforderungen an die Sicherheit gerecht zu werden.

Besonders hervorzuheben ist, dass die vorstehend aufgeführten Beschreibungen nur ein praktisches Ausführungsbeispiel der vorliegenden Erfindung darstellen. Fachlich normal gebildete Personen des betreffenden technischen Gebietes können auf der Basis des vorliegenden praktischen Ausführungsbeispiels ohne eigene Kreativität zweckmäßige Anpassungen der vorliegenden Erfindung vornehmen. Beispielsweise handelt es sich bei dem Klebeelement zur Verbindung von Rahen 2 mit äußerer Glasflächenplattenschicht 30 um doppelseitiges Klebeband 6. Aber es kann natürlich auch ein anderes Klebeelement verwendet werden wie beispielsweise Flüssigkleber. Weiter wird beispielsweise das Klebeelement bei dem vorliegenden praktischen Ausführungsbeispiel zwischen äußerer Glasflächenplattenschicht 30 und Rahmen 2 vorgesehen. Entsprechend den tatsächlichen Anforderungen ist es auch möglich, dass das Klebeelement zwischen innerer Glasflächenplattenschicht 34 und Rahmen 2 vorgesehen wird - also an der in Abbildung 5 gezeigten Position von Dichtungsfutter 7. Sobald diese Anpassungen die Zielsetzung der vorliegenden Erfindung verwirklichen, fallen solche zweckmäßigen Anpassungen sämtlich in den Schutzbereich der Patentansprüche der vorliegenden Erfindung.

## Patentansprüche

1. Türkörper (1), welcher einen Rahmen (2) sowie eine an vorstehend bezeichnetem Rahmen (2) befestigte Glastürplatte aufweist (3), wobei die vorstehend bezeichnete Glastürplatte (3) voneinander getrennt eine äußere Glasflächenplattenschicht (30), eine mittlere Glasflächenplattenschicht (32) und eine innere Glasflächenplattenschicht (34) aufweist, wobei die mittlere Glasflächenplattenschicht (32) durch Dichtungselemente (5) jeweils mit der äußeren Glasflächenplattenschicht (30) und der inneren Glasflächenplattenschicht (34) verbunden wird, so dass zwischen zwei benachbarten Glasflächenplattenschichten (30,32,34) ein Dichtungshohlraum (31,33) gebildet wird und wobei zumindest eine Glasflächenplattenschicht (30) durch ein Klebeelement (6) an dem Rahmen (2) befestigt wird, **dadurch gekennzeichnet, dass** der Türkörper (1) zwischen den Umfangsabmessungen von mittlerer Glasflächenplattenschicht (30) und von innerer Glasflächenplattenschicht (34) zum Rahmen (2) einen Spalt aufweist, wobei ein Dichtungsfutter (7) zwischen der inneren Glasflächenplattenschicht (34) und dem Rahmen (2) vorgesehen ist.

2. Türkörper (1) gemäß Patentanspruch 1, **dadurch gekennzeichnet, dass** es sich bei dem vorstehend bezeichneten Dichtungselement (5) um eine zwischen zwei Glasflächenplattenschichten (30,32,34) vorgesehene Dichtungsleiste aus Kunststoff handelt - beispielsweise um eine Leiste aus Polyvinylchlorid (PVC).

3. Türkörper (1) gemäß Patentanspruch 1 beziehungsweise 2, **dadurch gekennzeichnet, dass** es sich bei dem vorstehend bezeichneten Klebeelement (6) um doppelseitiges Klebeband handelt, wobei die eine Seite des doppelseitigen Klebebandes an den Rahmen (2) geklebt wird, während die andere Seite des doppelseitigen Klebebandes an die Seitenfläche der Glasflächenplatte geklebt wird.

4. Türkörper (1) gemäß Patentanspruch 3, **dadurch gekennzeichnet, dass** das vorstehend bezeichnete doppelseitige Klebeband zwischen der inneren Glasflächenplattenschicht (34) und dem Rahmen (2) vorgesehen wird.

5. Türkörper (1) gemäß Patentanspruch 3, **dadurch gekennzeichnet, dass** das vorstehend bezeichnete doppelseitige Klebeband zwischen der äußeren Glasflächenplattenschicht (30) und dem Rahmen (2) vorgesehen wird.

6. Türkörper (1) gemäß Patentanspruch 5, **dadurch gekennzeichnet, dass** die Abmessungen der vorstehend bezeichneten äußeren Glasflächenplattenschicht (30) größer sind als die der vorstehend bezeichneten mittlere Glasflächenplattenschicht (32) und inneren Glasflächenplattenschicht (34), wobei das doppelseitige Klebeband an den Rand der äu-ßeren Glasflächenplattenschicht (30) geklebt wird.

7. Türkörper (1) gemäß einem der vorherigen Patentansprüche, **dadurch gekennzeichnet, dass** in dem vorstehend bezeichneten Dichtungshohlraum (31,33) die Auffüllung mit trägem Gas erfolgt - beispielsweise mit Argon beziehungsweise mit Helium.

8. Türkörper (1) gemäß einem der vorherigen Patentansprüche, **dadurch gekennzeichnet, dass** die vorstehend bezeichnete äußere Glasflächenplattenschicht (30) und/oder die innere Glasflächenplattenschicht (34) mit einer schwachstrahlenden (Low-E)-Folie beschichtet wird/werden.

9. Türkörper (1) gemäß einem der vorherigen Patentansprüche, **dadurch gekennzeichnet, dass**
an der vorstehend bezeichneten äußeren Glasflächenplattenschicht (30) ein Heizelement zur Verhinderung von Kondensationsbildung vorgesehen wird, wobei es sich beispielsweise um eine elektrisch leitende Silberpaste beziehungsweise um eine elektrisch leitende Folie handelt.

10. Türkörper (1) gemäß Patentanspruch 9, **dadurch gekennzeichnet, dass** das vorstehend bezeichnete Heizelement mittels Verbindungsvorrichtung mit einer externen elektrischen Stromquelle verbunden wird.

11. Türkörper (1) gemäß Patentanspruch 10, **dadurch gekennzeichnet, dass** die vorstehend bezeichnete Verbindungsvorrichtung ein mit dem vorstehend bezeichneten Heizelement verbundenes Leitungskabel sowie einen am Ende des Leitungskabels vorgesehenen Metallkontakt aufweist.

12. Elektrisches Haushaltsgerät, insbesondere elektrischer Kühlschrank beziehungsweise Gefrierschrank, welches einen Schrankkörper mit einem darin befindlichen Aufnahmeraum aufweist, **dadurch gekennzeichnet, dass** das Gerät außerdem einen Türkörper (1) gemäß einem beliebigen der vorstehend aufgeführten Patentansprüche aufweist, wobei der vorstehend bezeichnete Türkörper (1) mit dem vorstehend bezeichneten Schrankkörper verbunden wird und zwischen geöffneter Position und geschlossener Position gedreht werden kann.

13. Elektrisches Haushaltsgerät gemäß Patentanspruch 12, **dadurch gekennzeichnet, dass** sich an dem vorstehend bezeichneten Schrankkörper ein mit der elektrischen Stromquelle des Schrankkörpers verbundener Metallkontaktpunkt befindet und dass bei geschlossener Position des vorstehend bezeichneten Türkörpers (1) Kontakt zwischen dem vorstehend bezeichneten Metallkontaktpunkt des Schrankkörpers und dem vorstehend bezeichneten Metallkontakt des Türkörpers (1) besteht, um das Heizelement an der Glasflächenplatte des Türkörpers (1) mit elektrischem Strom zu versorgen.

14. Elektrisches Haushaltsgerät gemäß Patentanspruch 13, **dadurch gekennzeichnet, dass** es sich bei der elektrischen Stromquelle des vorstehend bezeichneten Schrankkörpers um eine elektrische Gleichstromquelle mit niedriger Spannung handelt.

## Claims

1. Door body (1) which has a frame (2) as well as a glass door plate attached to said frame (2), wherein said frame (3) has an outer glass surface plate layer (30), a central glass surface plate layer (32) and an inner glass surface plate layer (34) separated from one another, wherein the central glass surface plate layer (32) is connected by sealing elements (5) to the outer glass surface plate layer (30) and the inner glass surface plate layer (34) respectively, so that a sealing cavity (31, 33) is formed in each case between two adjacent glass surface plate layers (30, 32, 34) and wherein at least one glass surface plate layer (30) is attached to the frame (2) by an adhesive element (6), **characterised in that** the door body (1) has a gap between the circumferential dimensions of the central glass surface plate layer (30) and of the inner glass surface plate layer (34) relative to the frame (2), wherein a sealing lining (7) is provided between the inner glass surface plate layer (34) and the frame (2).

2. Door body (1) according to claim 1, **characterised in that** the said sealing element (5) involves a sealing strip made of plastic provided between two glass surface plate layers (30, 32, 34), for example a strip made of polyvinyl chloride (PVC).

3. Door body (1) according to claim 1 or 2 respectively, **characterised in that** the said adhesive element (6) involves double-sided adhesive tape, with one side of the double-sided adhesive tape being glued to the frame (2) while the other side of the double-sided adhesive tape is glued to the side surface of the glass surface plate.

4. Door body (1) according to claim 3, **characterised in that** the said double-sided adhesive tape is provided between the inner glass surface plate layer (34) and the frame (2).

5. Door body according to claim 3, **characterised in that** the said double-sided adhesive tape is provided between the outer glass surface plate layer (30) and the frame (2).

6. Door body (1) according to claim 5, **characterised in that** the dimensions of the said outer glass surface plate layer (30) are larger than those of the said central glass surface plate layer (32) and inner glass surface plate layer (34), wherein the double-sided adhesive tape is glued to the edge of the outer glass surface plate layer (30).

7. Door body (1) according to one of the preceding claims, **characterised in that** the said sealing cavity (31, 33) is filled with an inert gas - for example with Argon or with Helium respectively.

8. Door body (1) according to one of the preceding claims, **characterised in that** the said outer glass surface plate layer (30) and/or the inner glass surface plate layer (34) is or are coated with a low emission (low-E) foil.

9. Door body (1) according to one of the preceding claims, **characterised in that** a heating element to prevent formation of condensation is provided on the said outer glass surface plate layer (30), with said element involving an electrically-conducting silver paste or an electrically-conducting foil respectively.

10. Door body (1) according to claim 9, **characterised in that** the said heating element is connected by means of a connection facility to an external electric power source.

11. Door body (1) according to claim 10, **characterised in that** the said connection facility has a cable connected to the said heating element as well as a metal contact provided on the end of the cable.

12. Electric household appliance, especially an electric refrigerator or freezer respectively, having a cabinet body with a storage compartment located therein, **characterised in that** the device also has a door body (1) according to any one of the claims listed above, wherein the said door body (1) is connected to the said cabinet body and is able to be rotated between an open position and the closed position.

13. Electric household appliance according to claim 12, **characterised in that** a metal contact point connected to the electric power source of the cabinet body is located on the said cabinet body and that in the closed position of the said door body (1) there is contact between the said metal contact point of the cabinet body and the said metal contact of the door body (1) in order to supply the heating element on the glass surface plate of the door body (1) with electric current.

14. Electric household appliance according to claim 13, **characterised in that** the electric power source of the said cabinet body involves an electric dc power source with a low voltage.

## Revendications

1. Corps de porte (1) lequel présente un cadre (2) ainsi qu'une plaque de porte en verre (3) fixée sur le cadre (2) désigné ci-dessus, la plaque de porte en verre (3) désignée ci-dessus présentant, séparées les unes des autres, une couche extérieure (30) de plaque de verre, une couche centrale (32) de plaque de verre et une couche intérieure (34) de plaque de verre, la couche centrale (32) de plaque de verre étant respectivement raccordée à la couche extérieure (30) de plaque de verre et à la couche intérieure (34) de plaque de verre au moyen d'éléments d'étanchéité (5), de sorte qu'un espace creux d'étanchéité (31, 33) est formé entre deux couches avoisinantes (30, 32, 34) de plaque de verre, et au moins une couche (30) de plaque de verre étant fixée sur le cadre (2) au moyen d'un élément adhésif (6), **caractérisé en ce que** le corps de porte (1) présente, entre les dimensions circonférentielles de la couche centrale (30) de plaque de verre et de la couche intérieure (34) de plaque de verre, une fente par rapport au cadre (2), une garniture d'étanchéité (7) étant ménagée entre la couche intérieure (34) de plaque de verre et le cadre (2).

2. Corps de porte (1) selon la revendication 1, **caractérisé en ce que** l'élément d'étanchéité (5) désigné ci-dessus est une baguette d'étanchéité en matière plastique, ménagée entre deux couches (30, 32, 34) de plaque de verre - par exemple une baguette en chlorure de polyvinyle (PVC).

3. Corps de porte (1) selon la revendication 1 respectivement 2, **caractérisé en ce que** l'élément adhésif (6) désigné ci-dessus est une bande adhésive à double face, une face de la bande adhésive à double face étant collée sur le cadre (2) alors que l'autre face de la bande adhésive à double face est collée sur la surface latérale de la plaque de verre.

4. Corps de porte (1) selon la revendication 3, **caractérisé en ce que** la bande adhésive à double face désignée ci-dessus est ménagée entre la couche intérieure (34) de plaque de verre et le cadre (2).

5. Corps de porte (1) selon la revendication 3, **caractérisé en ce que** la bande adhésive à double face désignée ci-dessus est ménagée entre la couche extérieure (30) de plaque de verre et le cadre (2).

6. Corps de porte (1) selon la revendication 5, **caractérisé en ce que** les dimensions de la couche extérieure (30) de plaque de verre désignée ci-dessus sont supérieures à celles de la couche centrale (32) de plaque de verre désignée ci-dessus et de la couche intérieure (34) de plaque de verre désignée ci-dessus, la bande adhésive à double face étant collée sur le bord de la couche extérieure (30) de plaque de verre.

7. Corps de porte (1) selon l'une quelconque des revendications précédentes, **caractérisé en ce que** dans l'espace creux d'étanchéité (31, 33) désigné ci-dessus, le remplissage est réalisé avec du gaz inerte - par exemple avec de l'argon respectivement de l'hélium.

8. Corps de porte (1) selon l'une quelconque des revendications précédentes, **caractérisé en ce que** la couche extérieure (30) de plaque de verre désignée ci-dessus et/ou la couche intérieure (34) de plaque de verre désignée ci-dessus est/sont revêtue(s) d'un film à faible émissivité (Low E Foil).

9. Corps de porte (1) selon l'une quelconque des revendications précédentes, **caractérisé en ce que** sur la couche extérieure (30) de plaque de verre désignée ci-dessus est ménagé un élément de chauffage destiné à empêcher la formation de condensation, lequel est par exemple une pâte d'argent électroconductrice respectivement un film électroconducteur.

10. Corps de porte (1) selon la revendication 9, **caractérisé en ce que** l'élément de chauffage désigné ci-dessus est relié à une source de courant électrique externe au moyen d'un dispositif de liaison.

11. Corps de porte (1) selon la revendication 10, **caractérisé en ce que** le dispositif de liaison désigné ci-dessus présente un câble relié à l'élément de chauffage désigné ci-dessus ainsi qu'un contact métallique ménagé à l'extrémité du câble.

12. Appareil ménager électrique, notamment réfrigérateur électrique resp. congélateur électrique, lequel présente un corps d'armoire doté d'un espace de logement s'y trouvant dedans, **caractérisé en ce que** l'appareil présente en outre un corps de porte (1) selon l'une quelconque des revendications mentionnées ci-dessus, le corps de porte (1) désigné ci-dessus étant relié au corps d'armoire désigné ci-dessus et pouvant être tourné entre une position ouverte et une position fermée.

13. Appareil ménager électrique selon la revendication 12, **caractérisé en ce qu'**un point de contact métallique relié à la source de courant électrique du corps d'armoire se trouve sur le corps d'armoire désigné ci-dessus, et **en ce qu'**en position fermée du corps de porte (1) désigné ci-dessus, il y a contact entre le point de contact métallique désigné ci-dessus du corps d'armoire et le contact métallique désigné ci-dessus du corps de porte (1) afin d'alimenter en courant électrique l'élément de chauffage placé sur la plaque de verre du corps de porte (1).

14. Appareil ménager électrique selon la revendication 13, **caractérisé en ce que** la source de courant électrique du corps d'armoire désigné ci-dessus est une source de courant continu électrique à basse tension.
